# EUROPEAN PATENT APPLICATION

(11) **EP 3 115 513 A1**
(43) Date of publication of application: **11.01.2017**
(21) Application number: 15752640.1
(22) Date of filing: 17.02.2015
(51) Int. Cl.: E02D 27/42

(54) **PREFABRICATED FOOTING FOR WIND TURBINES**

(30) Priority: 18.02.2014 ES 201430209
(71) Applicant: Inneo Torres, S.L., 28020 Madrid (ES)
(72) Inventor: JIMENO CHUECA, José Emilio, E-28001 Madrid (ES); LLEYDA DIONIS, Jose Luis, E-28003 Madrid (ES); SERNA GARCÍA-CONDE, Jose Salustiano, E-08005 Barcelona (ES)
(74) Representative: Botella Reyna, Antonio
(86) International application number: PCT/ES2015/070101
(87) International publication number: WO 2015/124815

(57) **Abstract**

It is foreseen that the footing be executed in an excavation, such that a lower concrete slab (2), with its corresponding steel reinforcement, is obtained at the base of the same, and upon which a plurality of prefabricated partitions (3), likewise of concrete, are radially disposed in the shape of a crown at a prefabricated or executed in situ concrete zone (4), such that the spaces defined between these elements are filled with the material (5) obtained by means of the excavation, in order finally to achieve a total or partial upper slab (1) upon this assembly. In this way, and by means of the inclusion of prefabricated elements, the construction works are simplified, which affects favourably both the time frame of execution and the fabrication costs.

## Description

### OBJECT OF THE INVENTION

The present invention relates to a prefabricated footing for a wind turbine tower whose evident object is to constitute a supporting means for a wind turbine tower which may be formed by various vertical modules of concrete or of any other material or nature.

The footing of the invention is foreseen to achieve a reduction in the costs of fabrication in comparison with conventional footings, and also to achieve a reduction in the time frame of the execution period on site.

### BACKGROUND OF THE INVENTION

In the field of application of the invention, the footings used as a supporting base for typical wind turbine towers are constructed by means of the pouring of concrete into an excavation executed in the terrain itself, in such a way that a layer of blinding concrete is executed at the base of the excavation, upon which the concrete for the footing is poured, in an extremely large quantity, the quantity thereof it would be desirable to minimise.

### DESCRIPTION OF THE INVENTION

The prefabricated footing for wind turbine towers proposed by the invention has been devised to resolve the aforementioned problem, based on a simple but highly efficient solution.

To this end, instead of being constituted solely by the pouring of concrete into an excavation in the terrain, this footing is formed by two slabs disposed in a flat position and at different levels; one at the base of the corresponding excavation, and the other at the upper part; slabs separated from each other by means of prefabricated partitions disposed at the time of execution and which will logically support the upper slab, such that a filling consisting of the material derived from the excavation executed in the terrain is poured between the partitions and the slabs. This filling acts as formwork for the lower surface of the upper slab and furthermore complements and increases significantly the weight of the footing, contributing effectively to the stability of the tower-footing assembly, preventing its overturning due to the action of the wind on the wind turbine tower and blades.

In this way, on the one hand, a reduction is achieved in the costs of the constitution of the footing, reducing the volume of concrete, minimising the need for formwork, and endowing the footing in question with sufficient rigidity and strength to withstand, and to carry out the assembly of, the corresponding wind turbine tower.

The contour of the prefabricated footing of the invention may be polygonal or circular, where the prefabricated partitions will be disposed radially between the two slabs and held by a concentric contour of concrete that will enable the prefabricated panels to remain vertically oriented until the filling of the space between the bottom slab and the upper area has been executed; on completion of said filling, the corresponding upper slab is disposed thereon. This contour or concentric zone of concrete may also consist of vertical precast concrete panels.

Evidently, by means of the prefabricated footing described above, the precast partitions radially disposed in the case of a circular surround, and projecting in an outward direction in the case of the surround being polygonal, define ribs endowing the footing with the necessary rigidity and strength required for its function.

All things considered, this is a reinforced concrete footing where the vertical partitions are manufactured at the factory and are conveniently transported to the site of execution of the footing itself, where the corresponding excavation will be performed, cleared, and a layer of blinding concrete poured therein, upon which the vertical partitions are disposed, subsequently executing the steel reinforcement and the concreting of the aforementioned lower slab and subsequently to execute the concreting of the vertical joints between the prefabricated partitions, the concreting thereof being concentric and vertically disposed with regard to the external contour of the footing itself and of the corresponding excavation.

Once the space established between the prefabricated partitions located on the lower slab is filled, said filling being performed with earth extracted during the excavation, thus precluding transport of the same to a dumping site, the assembly or disposition of the upper slab is executed on the filling and on the prefabricated vertical partitions, thus defining a lower concrete slab, an upper concrete slab, a number of intermediate prefabricated vertical concrete partitions and a concentric zone, also of concrete, from which the aforementioned prefabricated partitions emerge, disposed radially such that the filling between the slabs and the prefabricated partitions comprises a filling material consisting of earth derived from the excavation, thereby making the construction work much simpler, faster and more convenient, and with a lower economic cost.

The principal supporting elements of the footing are the prefabricated vertical partitions, which feature all the reinforcement necessary to withstand the flexing and shear loads of the footing. The function of the lower slab is merely to transmit the terrain reaction force to the vertical partitions; its steel reinforcement is therefore simple and quantitatively small. The function of the upper slab is to extend the compression area of the vertical partitions and to transmit thereto the direct loads received from the surface; its steel reinforcement is therefore also simple and minor. This upper slab may be limited to the area confined by the base of the tower, with the sole disposition of an independent slab on the earth, in the area external to the tower, between the upper edges of the vertical partitions.

Finally, it should be said that the prefabricated concrete partitions and concentric zone feature at their upper edge affixing means between the footing assembly and the segments of the initial section of the corresponding wind turbine tower, it also being possible to execute this concentric zone by means of prefabricated panels.

### DESCRIPTION OF THE DRAWINGS

As a supplement to the description to be made herein, and for the purpose of aiding the better understanding of the characteristics of the invention, in accordance with a preferred example of a practical embodiment of the same, a set of drawings is attached as an integral part of said description wherein, by way of illustration and not limitation, the following is portrayed:
- figure 1: portrays a plan view of a prefabricated reinforced concrete footing executed in accordance with the object of the present invention.
- figure 2: portrays a view corresponding to a cross-sectional detail according to the cross-section line A-A' of figure 1.

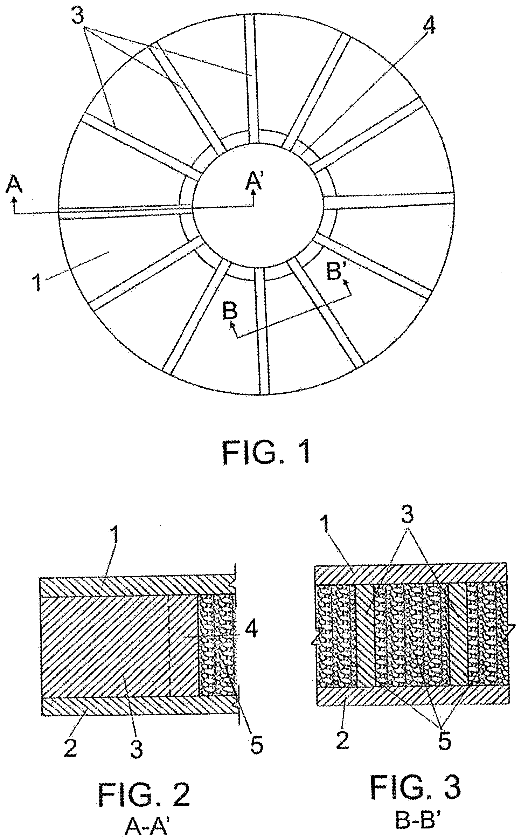

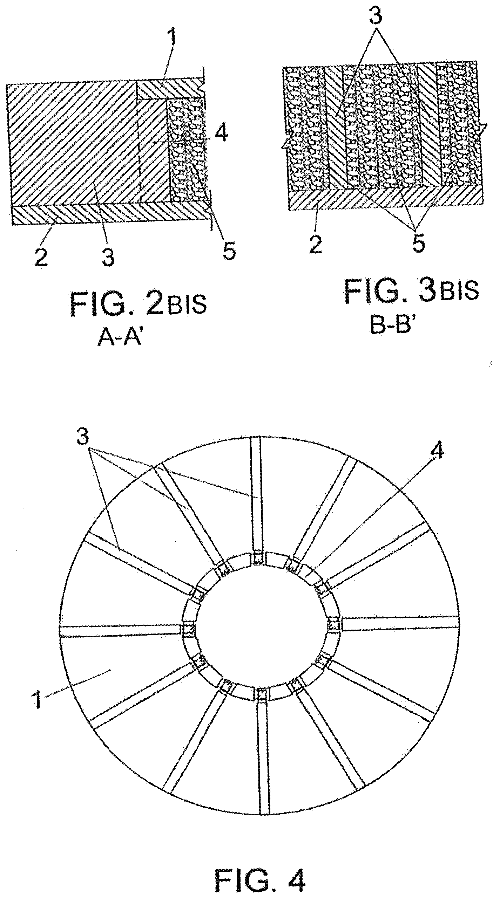

- figure 2 bis: portrays the same cross-section as that of figure 2, in the event of the upper slab being limited to the area confined by the base of the tower.
- figure 3: portrays another cross-sectional detail corresponding to the cross-section line B-B' of figure 1.
- figure 3 bis: portrays the same cross-section as that of figure 3, in the event of the upper slab being limited to the area confined by the base of the tower, with an independent slab between the vertical partitions.
- figure 4: portrays a view similar to that of figure 1, but corresponding to an alternative embodiment with prefabricated panels for the concentric zone of the footing.

### PREFERRED EMBODIMENT OF THE INVENTION

As may be seen in the aforementioned figures, the prefabricated reinforced concrete footing which is the object of the invention comprises a pair of horizontal slabs (1) and (2) disposed on two different horizontal planes and obtained in situ interiorly in an excavation executed in the terrain for the purpose thereof, such that the lower slab (2) is fabricated in concrete and constitutes the support for a plurality of vertical prefabricated concrete partitions (3) disposed radially and which are held initially by means of a concentric concreting (4) by way of a circular crown.

In all cases, the vertical prefabricated partitions (3) are obtained at the factory and are conveniently transported to the location of assembly of the footing, such that subsequent to the execution of the excavation, a layer of blinding concrete is poured and the disposition of the prefabricated partitions (3) is executed radially and in a vertical disposition, as portrayed in the figures, the steel reinforcement of the slab (2) is subsequently laid and the concrete of the slab (2) is poured. Subsequently, said prefabricated and vertical partitions (3) are linked by means of the aforementioned crown-shaped concreting (4).

Subsequently, the space established between the vertical partitions (3) and the lower slab (2) is filled by means of the material corresponding to the earth (5) derived from the excavation itself; once the entirety of the space is filled, the upper slab (1) is executed by means of the corresponding steel reinforcement and concreting. This upper slab may extend over the entirety of the footing surface or may occupy exclusively the surface area comprised by the concentric zone (4), the remainder being replaced by a simple independent slab.

With regard to the prefabricated partitions (3) and the concentric zone (4), these feature the appropriate means for the affixing of the footing to the segments which will form the lower section of the corresponding wind turbine tower.

Optionally, the concentric concrete (4) may also be comprised of vertical reinforced concrete panels.

## Claims

1. A prefabricated footing for wind turbine towers, this being executed in an excavation performed for this purpose in the terrain whereon the wind turbine tower is to be erected, **characterised in that** at the base of the excavation a concrete slab (2) with the corresponding steel reinforcement thereof, is disposed, fabricated in situ; said lower slab being complemented with an upper slab (1), separated at a distance from the former, and likewise fabricated in situ, it being foreseen that between said slabs there shall be disposed a plurality of vertical and radial prefabricated panels, also of concrete, and associated, subsequent to the disposition and execution of the lower slab (2), with a concrete item (4), likewise prefabricated and concentric with the external contour of the slab to be obtained, it being foreseen that the space defined between said slabs and the prefabricated partitions (3) shall be filled with the material (5) obtained from the excavation, and which will have served as the lower formwork for the upper slab (1).

2. A prefabricated footing for a wind turbine tower, as claimed in claim 1, **characterised in that** the prefabricated panels of the concentric zone (4), disposed between the upper and lower slabs, feature elements for the affixing of the footing assembly to the respective segments pertaining to the lower module of the tower to be erected.

3. A prefabricated footing for a wind turbine tower, as claimed in claim 1, **characterised in that** the contour of the footing is circular in shape.

4. A prefabricated footing for a wind turbine tower, as claimed in claim 1, **characterised in that** the contour of the footing is polygonal in shape.

5. A prefabricated footing for a wind turbine tower, as claimed in claim 1, **characterised in that** the concentric zone (4) is comprised of vertical prefabricated concrete partitions.

6. A prefabricated footing for a wind turbine tower, as claimed in claim 1, **characterised in that** the upper slab may extend across the entirety of the surface of the footing or occupy solely the space delimited by the concentric zone (4).

## Amended claims

### Amended claims under Art. 19.1 PCT

**1.** A prefabricated footing for wind turbine towers, this being executed in an excavation performed for this purpose in the terrain whereon the wind turbine tower is to be erected, **characterised in that** at the base of the excavation a concrete slab (2) with the corresponding steel reinforcement thereof, is disposed, fabricated in situ; said lower slab being complemented with an upper slab (1), separated at a distance from the former, and likewise fabricated in situ, it being foreseen that between said slabs there shall be disposed a plurality of vertical and radial prefabricated panels, also of concrete, and associated, subsequent to the disposition and execution of the lower slab (2), with a concrete item (4), likewise prefabricated and concentric with the external contour of the slab to be obtained, it being foreseen that the space defined between both slabs and the prefabricated partitions (3) and (4) shall be filled with the material (5) obtained from the excavation, and which will have served as the lower formwork for the upper slab (1).

**2.** A prefabricated footing for a wind turbine tower, as claimed in claim 1, **characterised in that** the prefabricated panels of the concentric zone (4), disposed between the upper and lower slabs, feature elements for the affixing of the footing assembly to the respective segments pertaining to the lower module of the tower to be erected.

**3.** A prefabricated footing for a wind turbine tower, as claimed in claim 1, **characterised in that** the contour of the footing is circular in shape.

**4.** A prefabricated footing for a wind turbine tower, as claimed in claim 1, **characterised in that** the contour of the footing is polygonal in shape.

**5.** A prefabricated footing for a wind turbine tower, as claimed in claim 1, **characterised in that** the concentric zone (4) is comprised of vertical prefabricated concrete partitions.

**6.** A prefabricated footing for a wind turbine tower, as claimed in claim 1, **characterised in that** the upper slab may extend across the entirety of the surface of the footing or occupy solely the space delimited by the concentric zone (4), or an intermediate space between both.
